# EUROPÄISCHE PATENTSCHRIFT

(11) **EP 0 365 693 B1**
(45) Veröffentlichungstag und Bekanntmachung des Hinweises auf die Patenterteilung: **18.11.1993**
(21) Anmeldenummer: 88115725.9
(22) Anmeldetag: 23.09.1988
(51) Int. Cl.: H04L 12/64, H04Q 11/04

(54) **Verfahren und Schaltungsanordnung zum Übertragen von Nachrichtensignalen in einem Breitband-Kommunikationsnetz**
Method and circuit arrangement for the transmission of information signals in a broadband communication network
Méthode et dispositif pour transmettre des signaux d'information dans un réseau de communication à large bande

(43) Veröffentlichungstag der Anmeldung: 02.05.1990
(73) Patentinhaber: SIEMENS AKTIENGESELLSCHAFT, 80333 München (DE)
(72) Erfinder: Kammerl, Anton, Dr.-Ing., D-8038 Gröbenzell (DE)

(56) Entgegenhaltungen:
- IEEE JOURNAL ON SELECTED AREAS IN COMMUNICATIONS, Band SAC-5, Nr. 8, Oktober 1987, Seiten 1222-1230, IEEE, New York, US; D.R. SPEARS: "Broadband ISDN switching capabilities from a services perspective"
- COMPUTER NETWORKING SYMPOSIUM, 17.-18. November 1986, Washington, D.C., Seiten 141-150, IEEE, New York, US; S. NOJIMA et al.: "High speed packet switching network for multi-media information"

## Beschreibung

Die Erfindung betrifft ein Verfahren und eine Schaltungsanordnung gemäß Oberbegriff des Patentanspruches 1.

Es ist bereits ein Breitband-Kommunikationsnetz bekannt ("Der Fernmelde-Ingenieur", 41. Jahrgang, September 1987, Heft 9 (Vermittlungstechnik in Paketübermittlungssytemen), S. 2-8), in welchem Signale unterschiedlicher Dienste nach einem sogenannten ATD (Asynchronous Time Division)-Verfahren, d.h. in Paketen, übertragen werden. Dabei verfügt das Breitband-Kommunikationsnetz an den Netzschnittstellen über Paketier/Depaketier-Einrichtungen für die Bildung bzw. Auflösung von Paketen.

In Breitband-Kommunikationsnetzen, in welchen Pakete fester Länge übertragen werden, treten bei der Übertragung von Nachrichtensignalen durch die erforderlichen Paketier/Depaketier-Zeiten sowie durch die Verarbeitungs- und Wartezeiten in Vermittlungseinrichtungen Verzögerungszeiten auf, die sich z. B. auf die Qualität von Sprachsignalübertragungen nachteilig auswirken können. So können durch zu lange Verzögerungszeiten unerwünscht große Gesprächspausen entstehen, die den Gesprächsfluß stören. Darüber hinaus können in Breitband-Kommunikationsnetzen, welchen neben Paketvermittlungsnetzen auch Vermittlungsnetze zugehörig sind, an die Teilnehmereinrichtungen über Gabelanordnungen angeschlossen sind, bei einem Übergang zwischen diesen Netzen zusätzliche Probleme auftreten. Diese bestehen darin, daß durch die gerade genannten Verzögerungszeiten in den Paketvermittlungsnetzen die Laufzeiten von Echosignalen, die durch die Gabelanordnung hervorgerufen werden, eine solche Größenordnung annehmen, daß die Echosignale von den Fernsprechteilnehmern als störend empfunden werden.

Die genannten Echosignale können nun zwar durch in die Übertragungsleitungen geschaltete Echosperren bzw. Echokompensatoren unterdrückt werden. Damit ist jedoch ein schaltungstechnischer Aufwand erforderlich, der zuweilen unerwünscht ist. Darüber hinaus ist bereits für eine Reduzierung der Verzögerungszeiten in Breitband-Paketvermittlungsnetzen vorgeschlagen worden, die Pakete fester Länge bei Sprachsignalübertragungen nur zum Teil mit Sprachsignalen zu belegen.

Außerdem ist aus "IEEE Journal on Selected Areas in Communications", Band SAC-5, Nr. 8, Oktober 1987, Seiten 1222 bis 1230, IEEE, New York, US, D.R. Spears: " Broadband ISDN Switching Capabilities from a Services perspective" ein sogenanntes "Dynamic time devision multiplexing" (DTDM) bekannt, bei welchem ein einziger physikalischer Hochgeschwindigkeits-Kanal in eine Mehrzahl von virtuellen Kanälen unterteilt wird, welche auf einer Rufbasis dynamisch zuordenbar und größenmäßig festlegbar sind. Dabei ist unter Bezugnahme auf ein Beispiel für die Übertragungsrate des physikalischen Kanals und der Anzahl der in einem Zeitschlitz und damit der in einem Paket übertragbaren Sprachsignale ausgeführt, daß eine bestimmte, durch die Paketierung bedingte Verzögerung auftritt. Weiterhin ist ausgeführt, daß eine Verdopplung der Paketrate zu einer Halbierung der Verzögerungszeit führt. Eine solche Halbierung der Verzögerungszeit kann dabei entweder durch eine Halbierung des Informationsinhaltes jedes der Pakete oder durch Benutzung eines qualitativ höheren Algorithmus für die Sprachcodierung erreicht werden.

Es ist nun Aufgabe der vorliegenden Erfindung, einen Weg zu zeigen, wie bei einer zumindest teilweise in einem Paketvermittlungsnetz verlaufenden Übertragung von Nachrichtensignalen die durch das Paketvermittlungsnetz bedingten Verzögerungszeiten reduziert werden können.

Gelöst wird die vorstehend aufgezeigte Aufgabe bei einem Verfahren und einer Anordnung gemäß den Oberbegriff en der Patentansprüche 1 und 5 durch die im kennzeichnenden Teil dieser Patenansprüche angegebenen Merkmale. Die Erfindung bringt den Vorteil mit sich, daß anhand der im Zuge eines Verbindungsaufbaus übertragenen Verbindugsaufbauinformationen verbindungsindividuell der Paketfüllgrad für Nachrichtensignal-Pakete und somit die auf die Paketierung und Depaketierung entfallende Verzögerungszeit in dem Paketvermittlungsnetz festgelegt werden kann. So ist es beispielsweise möglich, anhand empfangener Verbindungsaufbauinformationen den Paketfüllgrad von Nachrichtensignal-Paketen für Fernverbindungen zu reduzieren, während bei Verbindungen im Nahbereich, zum Beispiel bei Ortsverbindungen, die volle Paketkapazität ausgenutzt wird. Damit kann verbindungsindividuell die Betriebsweise der Paketier/Depaketier-Einrichtungen auf eine optimale Nutzbitrate eingestellt werden.

Ein lediglich geringer zusätzlicher Steuerungsaufwand in einer Paketvermittlungsanlage und in den Paketier/Depaketier-Einrichtungen ist dann erforderlich, wenn das Steuersignal von der betreffenden Paketvermittlungsanlage in für den Verbindungsaufbau dienenden, auf ein Rufpaket hin in Richtung der an der betreffenden Verbindung beteiligten Teilnehmereinrichtungen abzugebenden Paketen zu den Paketier/Depaketier-Einrichtungen übertragen wird. Durch das Einfügen von Steuersignalen als Zusatzinformationen in ohnehin während des Aufbaus von Verbindungen zu übertragende Pakete sind keine Änderungen in bestehenden Signalisierungs-Prozeduren erforderlich.

Darüber hinaus ist es zweckmäßig, daß von den Paketier/Depaketier-Einrichtungenjeweils in einer Grundeinstellung Nachrichtensignal-Pakete vollständig mit Nachrichtensignalen aufgefüllt werden bzw. Nachrichtensignal-Pakete vollständig aufgelöst werden und daß lediglich auf das Auftreten eines Steuersignals hin eine Reduzierung des Paketfüllgrades für die Nachrichtensignal-Pakete bzw. eine entsprechend dem festgelegten Paketfüllgrad reduzierte Auflösung von Nachrichtensignal-Paketen vorgenommen wird. Auf diese Weise ist der Steuerungsaufwand für die Übertragung von Steuersignalen bzw. für deren Auswertung reduziert.

Das Verfahren gemäß der vorliegenden Erfindung ist vorteilhaft in einem Breitband-Kommunikationsnetz anwendbar, welchem zumindes ein Paketvermittlungsnetz und ein Fernsprech-Vermittlungsnetz mit wenigstens einer Fernsprechvermittlungsanlage zugehörig sind, an die über Gabelanordnungen Fernsprech-Teilnehmereinrichtungen angeschlossen sind, um für die im Zuge von Wählverbindungen in dem Paketvermittlungsnetz zu übertragenden Sprachsignal-Pakete den Paketfüllgrad verbindungsindividuell festzulegen. Auf diesen Weise kann je nach der Auslegung des Kommunikationsnetzes der Einsatz von zuvor erwähnten Echobehandlungseinrichtungen stark reduziert bzw. vermieden werden.

Eine Schaltungsanordnung zur Durchführung des Verfahrens gemäß der vorliegenden Erfindung sowie eine vorteilhafte Ausgestaltung ergeben sich aus den Patentansprüchen 5 und 6. Der Vorteil dieser Schaltungsanordnung besteht in dem geringen zusätzlichen schaltungstechnischen Aufwand für die Festlegung des Paketfüllgrades für Nachrichtensignal-Pakete in Paketvermittlungsanlagen und in den in Nachrichtensignalverbindungen einbezogenen Paketier/Depaketier-Einrichtungen.

Im folgenden wird nun die vorliegende Erfindung beispielsweise anhand von Zeichnungen näher erläutert.
Figur 1 zeigt in schematischer Form ein Breitband-Kommunikationsnetz, bei dem die Erfindung angewandt ist,
Figur 2 zeigt ein Blockschaltbild einer Paketvermittlungsanlage und
Figur 3 zeigt ein Blockschaltbild einer Paketier/Depaketier-Einrichtung.

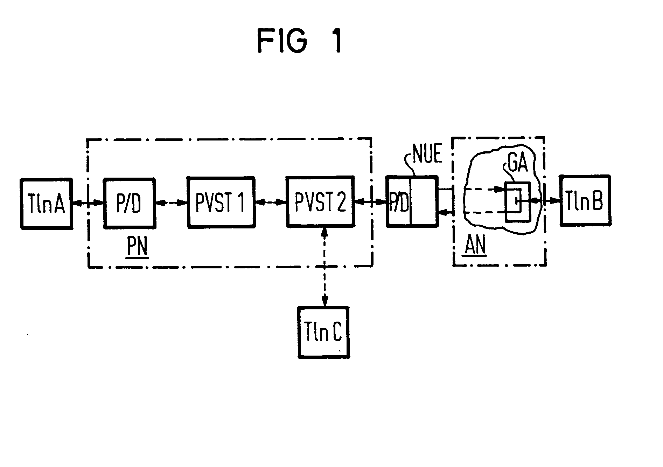

Das in Figur 1 dargestellte Breitband-Kommunikationsnetz möge beispielsweise aus einem Breitband-Paketvermittlungsnetz PN und einem Vermittlungsnetz AN für den Anschluß von analogen Fernsprech-Teilnehmereinrichtungen gebildet sein. Dabei sei das Paketvermittlungsnetz PN aus einer Mehrzahl von miteinander verbundenen Paketvermittlungsanlagen gebildet, von denen lediglich zwei mit PVST1 und PVST2 bezeichnete Vermittlungsanlagen dargestellt sind. Jede dieser Paketvermittlungsanlagen weist eine Vielzahl von Anschlußleitungen auf, die entweder als Teilnehmer-Anschlußleitungenoder als Amtsverbindungsleitungen benutzt sein können. Zur Vereinfachung der Figur 1 sind jedoch lediglich zwei derartige Anschlußleitungen pro Paketvermittlungsanlage dargestellt.

Innerhalb des Breitband-Paketvermittlungsnetzes erfolgt eine Übertragung von Signalen unterschiedlicher Dienste in Paketen fester Länge nach einem sogenannten ATM-Verfahren (Asynchronous Transfer Mode). Das Informationsfeld jedes der Pakete sei beispielsweise mit 32 Oktetts festgelegt. Die Übertragungsgeschwindigkeit auf den Anschlußleitungen betrage dabei zum Beispiel 140 Mbit/s. Für den Aufbau von Wählverbindungen mögen dabei, je nachdem, ob es sich bei den Anschlußleitungen um Teilnehmer-Anschlußleitungen oder um Amtsverbindungsleitungen handelt, Signalisierungsprozeduren benutzt sein, die für Teilnehmeranschlußleitungen dem gemäß der ISDN (Integrated Services Digital Network)-Empfehlungen festgelegten D-Kanal-Protokoll bzw. für Amtsverbindungsleitungen dem Zentralkanal-Zeichengabesystem Nr. 7 entsprechen.

An der Schnittstelle des Paketvermittlungsnetzes zu den Teilnehmereinrichtungen hin, bei denen es sich um ISDN-Teilnehmereinrichtungen handeln möge, sind Paketier/Depaketier-Einrichtungen vorgesehen, um die von den Teilnehmereinrichtungen abgegebenen Signale in Pakete fester Länge einzufügen bzw. über das Paketvermittlungsnetz übertragene Pakete für eine Weiterleitung der Signale an die Teilnehmereinrichtungen aufzulösen. Eine dieser Paketier/Depaketier-Einrichtungen P/D sowie eine damit verbundene Teilnehmereinrichtung TlnA sind in Figur 1 dargestellt. Dabei sei hier angemerkt, daß die Paketier/Depaketier-Einrichtungen auch innerhalb der Teilnehmereinrichtungen angeordnet sein können.

Für einen Netzübergang zwischen dem Paketvermittlungsnetz PN und dem bereits erwähnten Vermittlungsnetz AN ist eine Netzübergangs-Einrichtung NUE (Interworking Unit) vorgesehen, welche über eine Mehrzahl von in Figur 1 nicht dargestellten Anschlußleitungen verfügt. Diese führt sämtliche für den Netzübergang erforderlichen Signal- und Prozedur-Umsetzungen durch. Dafür ist unter anderem zu dem Paketvermittlungsnetz hin wenigstens eine Paketier/Depaketier-Einrichtung P/D vorhanden. Bei dem Vermittlungsnetz AN selbst möge es sich um ein herkömmliches Vermittlungsnetz handeln, an welches analoge Teilnehmereinrichtungen über Gabelanordnungen GA anschließbar sind. In Figur 1 sind eine derartige Gabelanordnung sowie eine damit verbundene Teilnehmereinrichtung TlnB schematisch dargestellt.

Nachdem zuvor das in Figur 1 dargestellte Kommunikationsnetz erläutert worden ist, wird nunmehr auf das Verfahren gemäß der vorliegenden Erfindung näher eingegangen. Dazu wird zunächst davon ausgegangen, daß für eine Sprachsignal-übertragung eine Verbindung von der Teilnehmereinrichtung TlnA des Paketvermittlungsnetzes PN zu der Teilnehmereinrichtung TlnB des Vermittlungsnetzes AN aufzubauen ist.

Für die Einleitung eines Verbindungsaufbaus wird in bekannter Weise von der Teilnehmereinrichtung TlnA eine Wahlinformation abgegeben, durch welche die für die Verbindung ausgewählte Teilnehmereinrichtung, hier die Teilnehmereinrichtung TlnB, bezeichnet ist. Diese Wahlinformation wird mit Hilfe der Paketier/Depaketier-Einrichtung P/D in ein sogenanntes Rufpaket eingefügt und anschließend der Paketvermittlungsanlage PVST1 zugeführt. In dieser wird dann in bekannter Weise anhand der Wahlinformation eine Leitweglenkung durchgeführt. Darüber hinaus wird anhand der Wahlinformation für die nach dem Verbindungsaufbau zu übertragenden Sprachsignal-Pakete der Paketfüllgrad festgelegt. Dabei kann beispielsweise so vorgegangen sein, daß für Gespräche im Nahbereich, zum Beispiel für Ortsgespräche, die gesamte, innerhalb eines Paketes zur Verfügung stehende Kapazität für eine Sprachsignal-Übertragung ausgenutzt ist. In diesem Nahbereich kann davon ausgegangen werden, daß bei der Übertragung von Sprachsignal-Paketen innerhalb des Paketvermittlungsnetzes Verzögerungszeiten auftreten, die sich noch nicht nachteilig auf die bereits oben erwähnten Echolaufzeiten auswirken.

Bei gewünschten Fernverbindungen, welche z.B. durch in den Wahlinformationen enthaltene festgelegte Vorwahlkennziffern gekennzeichnet sind, können sich dagegen durch die Verzögerungszeiten innerhalb des Paketvermittlungsnetzes die Echosignallaufzeiten so weit erhöhen, daß die Echosignale während eines Gespräches von den Gesprächsteilnehmern als Paketvermittlungsnetzes zu einem großen Teil durch die Paketier- und Depaketiezeiten für die Sprachsignal-Pakete verursacht sind, ist vorgesehen, daß für Fernverbindungen von der ein Rufpaket empfangenden Paketvermittlungsanlage, hier der Paketvermittlungsanlage PVST1, ein reduzierter Paketfüllgrad für die einzelnen Sprachsignal-Pakete festgelegt wird. Dabei kann so vorgegangen sein, daß entweder für sämtliche aufzubauenden Fernverbindungen ein einheitlicher reduzierter Paketfüllgrad, beispielsweise 1/2 der vorgegebenen Paketlänge (16 Oktetts bei einer Paketlänge von 32 Oktetts) oder ein durch Auswerten der Wahlinformationen nach der Länge der aufzubauenden Fernverbindungen gestaffelter reduzierter Paketfüllgrad (zum Beispiel 1/2, 1/4,...) festgelegt wird.

Angaben bez. eines festgelegten Paketfüllgrades werden von der Paketvermittlungsanlage PVST1 in Form eines Steuersignals zu den an der gerade aufzubauenden Verbindung beteiligten Paketier/Depaketier-Einrichtungen (P/D, NUE in Figur 1) hin übertragen. Dabei kann ein solches Steuersignal in Pakete eingefügt sein, welche im Zuge des Verbindungsaufbaus entsprechend der vorgesehenen Signalisierungs-Prozedur in Richtung der an der Verbindung beteiligten Teilnehmereinrichtungen, hier der Teilnehmereinrichtungen TlnA und TlnB, zu übertragen sind. In den Paketier/Depaketier-Einrichtungen wird auf den Empfang eines Steuersignals hin eine solche Einstellung vorgenommen, daß für eine an den Verbindungsaufbau sich anschließende Übertragung die Pakete entsprechend dem festgelegten Paketfüllgrad mit Sprachsignalen aufgefüllt bzw. aufgelöst werden.

Bei einem gewünschten Verbindungsaufbau von der Teilnehmereinrichtung TlnB zu der Teilnehmereinrichtung TlnA hin laufen im Prinzip den gerade erläuterten Verfahrensschritten entsprechende Verfahrensschritte ab. In diesem Falle werden die von der Teilnehmereinrichtung TlnB abgegebenen Wahlinformationen über die Netzübergangs-Einrichtung NUE in Form eines Rufpaketes an die Paketvermittlungsstelle PVST2 weitergeleitet, die in der zuvor angegebenen Weise den Paketfüllgrad für die innerhalb des Paketvermittlungsnetzes PN zu übertragende Sprachsignal-Pakete festlegt und ein entsprechendes Steuersignal an die an der Verbindung beteiligten Paketier/Depaketier-Einrichtungen hin überträgt.

Dabei kann anhand der Wahlinformationen zwischen Nahverbindungen und Fernverbindungen unterschieden werden. Für Fernverbindungen kann alternativ eine einheitliche Reduzierung oder eine nach Maßgabe der empfangenen Wahlinformationen und damit nach Maßgabe der Länge der Fernverbindungen gestaffelte Reduzierung des Paketfüllgrades von Sprachsignal-Paketen vorgenommen werden. Ist das Fernsprech-Vermittlungsnetz AN derart ausgebildet, daß zusätzlich zu den Wahlinformationen auch eine Identifizierung des Ursprungsbereiches übertragen wird, so kann die Festlegung des Paketfüllgrades entweder anhand dieser Identifizierung allein oder in Verbindung mit den Wahlinformationen erfolgen.

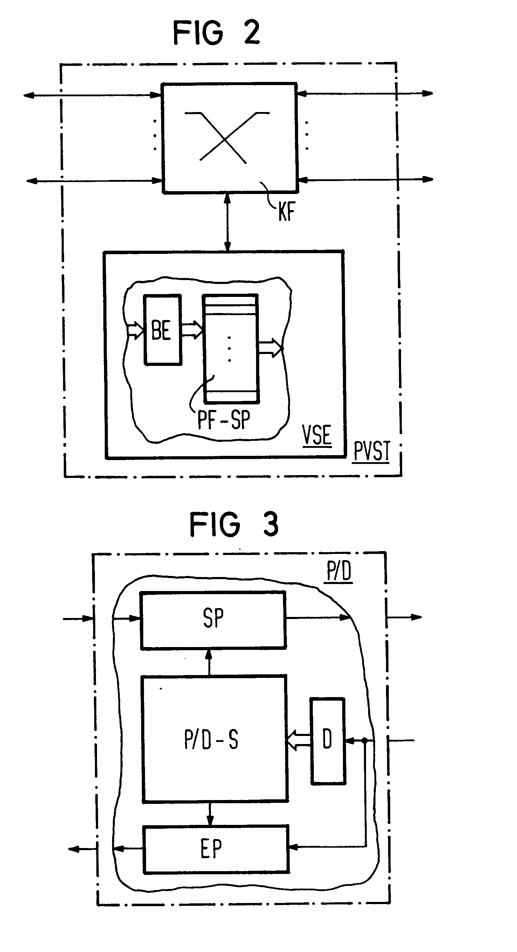

In Figur 2 ist in schematischer Form eine mit PVST bezeichnete Paketvermittlungsanlage dargestellt. Deren Aufbau und deren Vermittlungsprinzip ist bereits hinlänglich bekannt, so daß von dieser lediglich ein Koppelfeld KF sowie eine Vermittlungs-Steuereinheit VSE angedeutet sind. Dabei sind für die Vermittlungs-Steuereinheit diejenigen Zusatzeinrichtungen angegeben, die für die Durchführung des zuvor beschriebenen Verfahrens vorgesehen sind. Es handelt sich um eine Bewertungseinrichtung BE, die die von der Paketvermittlungsanlage in einem Rufpaket empfangenen Wahlinformationen und ggf. die Identifizierung des Ursprungsbereiches zugeführt erhält. Diese Informationen werden durch logische Verknüpfungsglieder beispielsweise in Form von Vergleicheranordnungen hinsichtlich des Vorhandenseins von eine Fernverbindung anzeigenden Kennungen ausgewertet. Je nach Ergebnis dieser Auswertung treten am Ausgang der Bewertungseinrichtung entsprechende Ausgangssignale auf. Dabei kann durch derartige Ausgangssignale auch zwischen einzelnen Fernverbindungen bzw. Fernverbindungsgruppen differenziert werden.

Die Ausgangssignale der Bewertungseinrichtung BE werden einem Paketfüllgrad-Speicher PF-SP als Adressensignale zugeführt. Dieser Paketfüllgrad-Speicher, bei dem es sich beispielsweise um einen Festwertspeicher oder einen Schreib/Lese-Speicher handeln möge, weist eine Mehrzahl von Adressensignalen zugeordneten Speicherzellen auf, in welchen jeweils Angaben bez. eines festgelegten Paketfüllgrades gespeichert sind. Mit jedem Bereitstellen von Adressensignalen wird die diesen zugeordnete Speicherzelle für eine Abgabe der darin gespeicherten Angaben angesteuert. Anhand dieser Angaben generiert die Vermittlungs-Steuereinheit VSE ein bereits oben erwähntes Steuersignal für eine Einstellung der genannten Paketier/Depaketier-Einrichtungen P/D.

In den Speicherzellen des Paketfüllgrad-Speichers PF-SP können als Angaben bez. der festgelegten Paketfüllgrade auch direkt die an die Paketier/Depaketier-Einrichtungen zu übertragenden Steuersignale gespeichert sein. Damit wird die Vermittlungs-Steuereinheit VSE hinsichtlich der Generierung der Steuersignale entlastet.

In Figur 3 ist in schematischer Form eine Paketier/Depaketier-Einrichtung P/D dargestellt. Da deren Aufbau sowie deren Wirkungsweise bereits bekannt sind, sind hier lediglich ein Sendepuffer SP für die Bildung von innerhalb des Paketvermittlungsnetzes PN zu übertragenden Paketen fester Länge, ein Empfangspuffer EP für die Auflösung von über das Paketvermittlungsnetz empfangenen Paketen sowie eine Paketier/Depaketier-Steuereinheit P/D-S angedeutet. Neben den genannten Einrichtungen ist ein Diskriminator D vorgesehen, der während eines Verbindungsaufbaus das Auftreten eines von einer Paketvermittlungsanlage her übertragenen Steuersignals überwacht. Wie bereits oben erwähnt, kann die Übertragung eines Steuersignals beispielsweise in einem Paket erfolgen, welches im Zuge des Verbindungsaufbaus von den Paketvermittlungsanlagen in Richtung der an der aufzubauenden Verbindung beteiligten Teilnehmereinrichtungen zu übertragen ist.

Bei Erkennen eines Steuersignals gibt der Diskriminator D gegebenenfalls nach einer Umcodierung Einstellsignale an die Paketier/Depaketier-Steuereinheit P/D-S ab. Mit Hilfe dieser Einstellsignale erfolgt von der Paketier/Depaketier-Steuereinheit her die Einstellung des Sendepuffers SP und des Empfangspuffers EP. Dafür werden in einer Paketier/Depaketier-Einrichtung üblicherweise vorhandene, der Steuerung der genannten Puffer dienende Zähleranordnungen derart voreingestellt, daß der Sendepuffer SP eine dem von einer Paketvermittlungsanlage festgelegten Paketfüllgrad entsprechende Anzahl von Sprachsignalen in ein zu übertragendes Sprachsignal-Paket einfügt bzw. der Empfangspuffer EP eine dem festgelegten Paketfüllgrad entsprechende Auflösung von empfangenen Sprachsignal-Paketen vornimmt.

Die Voreinstellung der genannten Zähleranordnungen kann dabei auch in der Weise erfolgen, daß in eine Grundeinstellung Sprachsignal-Pakete vollständig mit Sprachsignalen aufgefüllt werden bzw. Sprachsignal-Pakete vollständig aufgelöst werden. Lediglich auf das Auftreten eines Steuersignals hin wird die Voreinstellung der Zähleranordnungen modifiziert, um den Sendepuffer SP und den Empfangspuffer EP entsprechend dem empfangenen Steuersignal auf einen reduzierten Paketfüllgrad einzustellen.

Vorstehend wurde das Verfahren gemäß der vorliegenden Erfindung lediglich am Beispiel der Sprachsignal-Übertragung in einem Breitband-Kommunikationsnetz beschrieben, welchem ein Breitband-Paketvermittlungsnetz und ein Vermittlungsnetz für den Anschluß von analogen Teilnehmereinrichtungen zugeghörig sind. Die Anwendung dieses Verfahrens ist jedoch nicht auf derartige Breitband-Kommunikationsnetze beschränkt, sondern es ist allgemein in Breitband-Kommunikationsnetzen anwendbar, welchen zumindest ein Breitband-Paketvermittlungsnetz zugehörig ist und in welchen für eine Nachrichtensignalübertragung die Verzögerungszeiten zu reduzieren sind. Als Beispiel sei hier ein Breitband-Kommunikationsnetz genannt, welches lediglich aus einem Breitband-Paketvermittlungsnetz besteht, in dem u. a. Sprachsignale zwischen zwei Teilnehmereinrichtungen, gemäß Figur 1 beispielsweise zwischen der Teilnehmereinrichtung TlnA und einer mit der Paketvermittlungsanlage PVST2 über eine nicht dargestellte Paketier-Depaketier-Einrichtung verbundenen Teilnehmereinrichtung (TInC), zu übertragen sind. Darüber hinaus kann in einem Breitband-Kommunikationsnetz mit zumindest einem Paketvermittlungsnetz das Verfahren gemäß der vorliegenden Erfindung auch für die Übertragung von Nachrichtensignalen anderer Dienste, wie z. B. die Übertragung von Datensignalen und Bildsignalen, angewandt sein, wenn für diese Übertragung geringe Verzögerungszeiten gefordert sind. Für diesen Fall kann beispielsweise eine solche schnelle Übertragung durch ein im Zuge des Verbindungsaufbaues von einer Teilnehmereinrichtung her automatisch oder bei Bedarf zusammen mit den Wahlinformationen übertragenes Anforderungssignal gefordert werden. Das Auftreten dieses Anforderungssignals wird in der oben erwähnten Bewertungseinrichtung BE überwacht. Ein solches Anforderungssignal kann im übrigen auch bei einer Sprachsignal-Übertragung im Bedarfsfalle beispielsweise durch Betätigen einer Sondertaste von einer der Teilnehmereinrichtungen abgegeben werden.

## Patentansprüche

1. Verfahren zum Übertragen von Nachrichtensignalen im Zuge von Wählverbindungen zwischen Teilnehmereinrichtungen (TLnA, TLnB) eines Breitband-Kommunikationsnetzes, welches zumindest ein Paketvermittlungsnetz (PN) mit wenigstens einer Paketvermittlungsanlage (PVST1) aufweist, in welchem die Nachrichtensignale in Paketen fester Länge übertragen werden und welches an den Netzschnittstellen über Paketier/Depaketier-Einrichtungen (P/D) für die Bildung bzw. Auflösung der Pakete fester Länge verfügt, dadurch gekennzeichnet,
daß von einer an einer Netzschnittstelle des Paketvermittlungsnetzes liegenden Paketvermittlungsanlage (PVST1) bei Auftreten eines die Einrichtung einer Wählverbindung fordernden Rufpaketes hin nach Maßgabe der in dem Rufpaket enthaltenen Verbindungsaufbauinformationen der Paketfüllgrad für die nach dem Aufbau der betreffenden Verbindung zu übertragenden Nachrichtensignal-Pakete festgelegt wird, daß im Zuge des Aufbaus der betreffenden Verbindung ein Angaben bezüglich des gerade festgelegten Paketfüllgrades enthaltendes Steuersignal zu sämtlichen an der aufzubauenden Verbindung beteiligten Paketier/Depaketier-Einrichtungen (P/D) des Kommunikationsnetzes hin übertragen wird und daß nach einem erfolgten Verbindungsaufbau von der jeweiligen Paketier/Depaketier-Einrichtung nach Maßgabe des zuvor empfangenen Steuersignals die Bildung bzw. Auflösung der Nachrichtensignal-Pakete vorgenommen wird.

2. Verfahren nach Anspruch 1, dadurch gekennzeichnet,
daß das Steuersignal von der betreffenden Paketvermittlungsanlage (PVST1) in für den Verbindungsaufbau dienenden, auf ein Rufpaket hin in Richtung der an der betreffenden Verbindung beteiligten Teilnehmereinrichtungen abzugebenden Paketen zu den Paketier/Depaketier-Einrichtungen (P/D) übertragen wird.

3. Verfahren nach Anspruch 1 oder 2, dadurch gekennzeichnet,
daß von den Paketier/Depaketier-Einrichtungen (P/D) jeweils in einer Grundeinstellung Nachrichtensignal-Pakete vollständig mit Nachrichtensignalen aufgefüllt bzw. Nachrichtensignal-Pakete vollständig aufgelöst werden
und daß lediglich auf das Auftreten eines Steuersignals hin eine Reduzierung des Paketfüllgrades für die Nachrichtensignal-Pakete bzw. eine entsprechend dem festgelegten Paketfüllgrad reduzierte Auflösung von Nachrichtensignal-Paketen vorgenommen wird.

4. Verfahren nach einem der Ansprüche 1 bis 3, dadurch gekennzeichnet,
daß das Breitband-Kommunikationsnetz zumindest ein Paketvermittlungsnetz (PN) und ein Fernsprechvermittlungsnetz (AN) mit wenigstens einer Fernsprech-Vermittlungsanlage aufweist, an welche über Gabelanordnungen (GA) Fernsprech-Teilnehmereinrichtungen (TLnB) angeschlossen sind, und daß für die im Zuge von Wählverbindungen in dem Paketvermittlungsnetz zu übertragenden Sprachsignal-Pakete der Paketfüllgrad nach Maßgabe der übertragenen Wahlinformationen bzw. Identifizierungen des Ursprungsbereiches verbindungsindividuell festgelegt wird.

5. Schaltungsanordnung zum Übertragen von Nachrichtensignalen im Zuge von Wählverbindungen zwischen Teilnehmereinrichtungen TLnA, TLnB) eines Breitband-Kommunikationsnetzes, welches zumindest ein Paketvermittlungsnetz (PN) mit wenigstens einer Paketvermittlungsanlage (PVST1) aufweist, in welchem die Nachrichtensignale in Paketen fester Länge übertragen werden und welches an den Netzschnittstellen über Paketier/Depaketiereinrichtungen (P/D) für die Bildung bzw. Auflösung der Pakete fester Länge verfügt, zur Durchführung des Verfahrens nach einem der Ansprüche 1 bis 4,
dadurch gekennzeichnet,
daß in einer der betreffenden Paketvermittlungsanlage (PVST1) zugehörigen Vermittlungs-Steuereinheit (VSE) eine Auswerteeinrichtung (BE) für die Bewertung der in einem Rufpaket übertragenen Verbindungsaufbauinformationen und eine mit dieser Auswerteeinrichtung verbundene Speicheranordnung (PF-SP) mit einer Mehrzahl von Speicherplätzen für die Speicherung von Angaben bezüglich festgelegter Paketfüllgrade vorgesehen sind,
daß am Ausgang der Auswerteeinrichtung (BE) den gerade vorliegenden Verbindungsaufbauinformationen zugeordnete Adressensignale bereitgestellt sind, durch welche eine der Speicherzellen der Speicheranordnung (PF-SP) für eine Bereitstellung der in dieser gespeicherten Angaben angesteuert ist,
daß in der Vermittlungs-Steuereinheit (VSE) nach Maßgabe der von der Speicheranordnung bereitgestellten Angaben ein an die Paketier/Depaketier-Einrichtungen (P/D) zu übertragendes Steuersignal gebildet ist
und daß in der jeweiligen Paketier/Depaketier-Einrichtung ein Diskriminator (D) für die Erkennung von Steuersignalen vorgesehen ist, welcher auf den Empfang eines Steuersignals hin durch Abgabe eines entsprechenden Einstellsignals eine Einstellung der jeweiligen Paketier/Depaketier-Einrichtung hinsichtlich des festgelegten Paketfüllgrades gestattet.

6. Schaltungsanordnung nach Anspruch 5, da
durch gekennzeichnet,
daß in den Speicherplätzen der Speicheranordnung (PF-SP) als Paketfüllgrad-Angaben die diesen zugeordneten, zu übertragenden Steuersignale direkt gespeichert sind.

## Claims

1. A method for transmitting information signals in dialled connections between subscriber facilities (TLnA, TLnB) of a broadband communication network which exhibits at least one packet switching network (PN) containing at least one packet switching system (PVST1), in which the information signals are transmitted in fixed-length packets and which has packet assembly/disassembly facilities (P/D) at the network interfaces for forming and disassembling the fixed-length packets, characterized in that, when a call packet demanding the setting up of a dialled connection occurs, a packet switching system (PVST1) located at a network interface of the packet switching network determines, in accordance with the connection set-up information items contained in the call packet, the degree of packet filling for the information signal packets to be transmitted after the relevant connection has been set up, in that during the setting-up of the relevant connection, a control signal containing information relating to the degree of packet filling just determined is transmitted to all packet assembly/disassembly facilities (P/D) of the communication network involved in the connection to be set up, and in that, after a connection has been set up, the respective packet assembly/disassembly facility handles the formation or, respectively, disassembly of the information signal packets in accordance with the control signal previously received.

2. Method according to Claim 1, characterised in that the control signal is transmitted by the relevant packet switching system (PVST1) to the packet assembly/disassembly facilities (P/D) in packets used for setting up the connection and to be output in the direction of the subscriber facilities involved in the relevant connection following a call packet.

3. Method according to Claim 1 or 2, characterised in that information signal packets are in each case filled completely with information signals or information signal packets are completely disassembled by the packet assembly/disassembly facilities (P/D) in a basic setting, and in that the degree of packet filling for the information signal packets is only reduced, or that a reduced disassembly of information signal packets is only effected in accordance with the predetermined degree of packet filling, following the occurrence of a control signal.

4. Method according to one of Claims 1 to 3, characterised in that the broadband communication network exhibits at least one packet switching network (PN) and a telephone switching network (AN) with at least one telephone switching system, to which telephone subscriber facilities (TLnB) are connected via hybrid arrangements (GA), and in that the degree of packet filling for the voice signal packets to be transmitted in dialled connections in the packet switching network is determined connection-individually in accordance with the transmitted dialling information items or identification items of the area of origin.

5. Circuit arrangement for transmitting information signals in dialled connections between subscriber facilities (TLnA, TLnB) of a broadband communication network which exhibits at least one packet switching network containing at least one packet switching system (PVST1) in which the information signals are transmitted in fixed-length packets and which has packet assembly/disassembly facilities (P/D) at the network interfaces for forming and, respectively, disassembling the fixed-length packets, for carrying out the method according to one of Claims 1 to 4, characterised in that in a switching control unit (VSE) belonging to the relevant packet switching system (PVST1), an evaluating facility (BE) for assessing the connection set-up information items transmitted in a call packet and a memory arrangement (PF-SP) connected to this evaluating facility and having a plurality of storage spaces for storing information relating to predetermined degrees of packet filling are provided, in that at the output of the evaluating facility (BE), address signals associated with the currently available connection set-up information items are provided by means of which one of the storage cells of the memory arrangement (PF-SP) is activated for providing the information stored in it, that a control signal to be transmitted to the packet assembly/disassembly facilities (P/D) is formed in the switching control unit (VSE) in accordance with the information provided by the memory arrangement, and in that in the respective packet assembly/disassembly facility, a discriminator (D) for detecting control signals is provided which, following the reception of a control signal, allows the respective packet assembly/disassembly facility to be set with respect to the predetermined degree of packet filling by outputting a corresponding setting signal.

6. Circuit arrangement according to Claim 5, characterised in that the control signals associated with the degree-of-packet-filling and to be transmitted are directly stored in the storage spaces of the memory arrangement (PF-SP) as degree-of-packet-filling information.

## Revendications

1. Procédé pour la transmission de signaux d'informations au cours de liaisons de sélection entre des postes d'abonnés (TLnA, TLnB) d'un réseau de communication à large bande, qui comporte au moins un réseau de commutation de paquets (PN) comportant au moins une installation de commutation de paquets (PVST1 dans laquelle les signaux d'informations sont transmis sous la forme de paquets de longueur fixe et qui dispose, au niveau des interfaces de liaison au réseau, d'un dispositif de formation de paquets/suppression de paquets (P/D) pour la formation et la suppression des paquets de longueur fixe, caractérisé par le fait que lors de l'apparition d'un paquet d'appel, qui sollicite l'établissement d'une liaison de sélection, le degré de remplissage des paquets est fixé pour les paquets de signaux d'informations, qui doivent être transmis après l'établissement de la liaison concernée, en fonction des informations d'établissement de liaisons contenues dans le paquet d'appel, par une installation de commutation de paquets (PVST1) qui est raccordée à une interface du réseau de commutation de paquets, au cours de l'établissement de liaisons concernées, un signal de commande contenant des indications concernant le degré de remplissage de paquets précisément fixés, est transmis à tous les dispositifs de formation de paquets/suppression de paquets (P/D), qui participent à la liaison devant être établie, du réseau de communication et une fois réalisée l'établissement de la liaison par le dispositif respectif de formation de paquets/suppression de paquets, la formation ou la suppression des paquets de signaux d'informations est exécutée en fonction du signal de commande reçu antérieurement.

2. Procédé suivant la revendication 1, caractérisé par le fait que le signal de commande de l'installation concernée de commutation de paquets (PVST1) est transmis aux dispositifs de formation de paquets/suppression de paquets (P/D), dans des paquets utilisés pour l'établissement de liaisons et devant être délivrés lors de l'apparition d'un paquet d'appel, en direction des postes d'abonnés participant à la liaison considérée.

3. Procédé suivant la revendication 1 ou 2, caractérisé par le fait que des paquets de signaux d'informations sont complètement remplis de signaux d'informations ou que des paquets de signaux d'informations sont complètement défaits par les dispositifs de formation de paquets/suppression de paquets (P/D), respectivement dans une position de base, et
que c'est seulement lors de l'apparition d'un signal de commande qu'une réduction du degré de remplissage des paquets pour les paquets de signaux d'informations ou une suppression, réduite de façon correspondante du degré fixé de remplissage des paquets, de paquets de signaux d'informations est exécutée.

4. Procédé suivant l'une des revendications 1 à 3, caractérisé par le fait que le réseau de commutation à large bande possède au moins un réseau de commutation de paquets (PN) et un réseau de commutation téléphonique (AN) comportant au moins une installation de commutation téléphonique, à laquelle des postes d'abonnés téléphoniques (TLnB) sont raccordés par l'intermédiaire de termineurs (GA), et que pour les paquets de signaux vocaux, qui doivent être transmis au cours de liaisons de sélection dans le réseau de commutation de paquets, le degré de remplissage des paquets est fixé pour chaque liaison en fonction des informations de sélection transmises ou d'identifications de la zone d'origine.

5. Montage pour la transmission de signaux d'informations au cours de liaisons de sélection entre des postes d'abonnés (TLnA, TLnB) d'un réseau de communication à large bande, qui comporte au moins un réseau de commutation de paquets (PN) comportant au moins une installation de commutation de paquets (PVST1 dans laquelle les signaux d'informations sont transmis sous la forme de paquets de longueur fixe et qui dispose, au niveau des interfaces de liaison au réseau, d'un dispositif de formation de paquets/suppression de paquets (P/D) pour la formation et la suppression des paquets de longueur fixe, caractérisé par le fait que
dans une unité de commande de commutation (VSE), associée à l'installation considérée de commutation de paquets (PVST1 il est prévu un dispositif d'évaluation (BE) servant à évaluer les informations d'établissement de liaisons transmises dans un paquet d'appel, et un dispositif de mémoire (PF-SP), qui est raccordé à ce dispositif d'évaluation et comporte une multiplicité d'emplacements de mémoire pour la mémorisation d'indications concernant le degré fixé de remplissage des paquets,
qu'à la sortie du dispositif d'évaluation (BE) sont délivrés des signaux d'adresses, qui sont associés aux informations précisément présentes d'établissement de liaisons et au moyen desquelles l'une des cellules de mémoire du dispositif de mémoire (PF-SP) est commandée pour la préparation des indications mémorisées dans ce dispositif,
que dans l'unité de commande de commutation (VSE), un signal de commande, qui doit être transmis aux dispositifs de formation de paquets/suppression de paquets (P/D) est formé en fonction des indications préparées par le dispositif de mémoire, et
que dans le dispositif respectif de formation de paquets/suppression de paquets, il est prévu un discriminateur (D) qui sert à identifier des signaux de commande et permet, lors de la réception d'un signal de commande, un réglage du degré fixé de remplissage des paquets dans le dispositif de formation de paquets/suppression de paquets, lors de la réception d'un signal de commande, au moyen de la délivrance d'un signal de réglage correspondant.

6. Montage suivant la revendication 5, caractérisé par le fait qu'aux emplacements de mémoire du dispositif de mémoire (PF-SP) sont mémorisés directement, en tant qu'indications du degré de remplissage des paquets, les signaux de commande associés à ces indications et qui doivent être transmis.
